# EUROPEAN PATENT SPECIFICATION

(11) **EP 0 677 541 B1**
(45) Date of publication and mention of the grant of the patent: **03.07.2002**
(21) Application number: 95104613.5
(22) Date of filing: 29.03.1995
(51) Int. Cl.: C08G 18/24, C08G 18/38

(54) **Coating process**
Beschichtungsverfahren
Procédé de revêtement

(30) Priority: 15.04.1994 GB 9407495; 04.11.1994 GB 9422243; 04.11.1994 GB 9422244
(43) Date of publication of application: 18.10.1995
(73) Proprietor: PPG Industries Ohio, Inc., Cleveland, OH 44111 (US)
(72) Inventor: Fenn, David Robert, Burnham, Buckinghamshire SL1 7ND (GB); Kay, Graham Stuart, Stoke Poges, Buckinghamshire SL2 4DH (GB)
(74) Representative: McCall, John Douglas

(56) References cited:
- EP-A- 0 415 284
- EP-A- 0 423 642
- EP-A- 0 454 219
- GB-A- 2 188 327
- US-A- 3 980 579
- US-A- 4 314 934
- Body Shop Magazine, May 1995, pages 30-36
- The Refinishers Handbook; ICI Autocolor; 1983; pages 74-83
- Technical Information Sheet: "The planning and Construction of Paint Shops"; Glasurit GmbH (4 pages)
- Technical Information Sheets No. J4400, I0500, I1100, I1540, I0320, H3400, H4500, H1200, G0200; ICI Autocolor (40 pages)
- Product Information Sheets: "Standoflex", "Standox", "Standox Hardeners & Thinners, a recommended guide", "Standox-Rapid 16655-801.7999.1" (13 pages); Herberts Standox Autolack.
- Technical Data Sheets: "Cromax", "3800S Cromaclear HS", (7 pages); DuPont Automotive Finishes.
- Technical Information Sheets: "Glasurit MS-Clear 923-43 extremely scratch resistant", "Glasurit High-Solid 2K Topcoat 22", Glasurit-Tinting Filler 285-75", "Glasurit 2K Primer, water-borne, grey"; Glasurit GmbH (8 pages)
- Technical Information Sheets: "Crystaltop HD 250", "Crystal-Top"; R-M (5 pages)
- Technical Information Sheets: "Sikkens Autonova-System 1", "Sikkens Autocryl MS Harderner 20/30", "Sikkens Plastoflex Primer", "Sikkens Priming Filler 680", "Autocryl LV 420", "Autoclear LV Ultra Fast"; AKZO Nobel Coatings LTD (14 pages)
- Technical Data Sheets: "Permahyd 2K EP Wet-on-Wet Thermo Surfacer 5035", "Permasolid HS Automotive Topcoat Series 270", "Permasolid HS Clear Coat 8030", "Permacron Acrylic Uerthane Clear Coat T 40", "Permacron Base Coat Series 293", "Permacron Acrylic Urethane Series 257"; Spies-Hecker (19 pages)

## Description

This invention relates to a coating process for motor vehicles using two component paints based on hydroxyl functional polymers and polyisocyanates using selected catalyst mixtures. The invention also relates to processes for the preparation of certain of the catalyst mixtures, and coating compositions containing them.

One commonly used type of coating compositions comprise a hydroxyl functional polymer and a polyisocyanate crosslinker. The compositions are applied as a layer to the surface of a substrate and either left to dry and cure at room temperature or else heated to initiate or speed the drying and curing process. During drying and curing the solvent evaporates and the hydroxyl groups on the polymer and the isocyanate groups on the crosslinker react together so as to produce a crosslinked coating film.

This type of coating composition is often used in the repair and refurbishment of motor vehicles, known as Refinishing. Refinishing is usually necessary after a vehicle has been involved in an accident or sometimes to hide the effects of age. They can also be used in the painting of commercial vehicles, for example in the livery of their owners. This use is often referred to as Comercial Transport or CT.

Refinish paints are generally supplied in the form of two components which are mixed together shortly before use. For this reason they are often called 'two pack' paints. One component, often referred to as the 'paint pack', comprises the main hydroxyl functional polymer together with any pigments, carried in an organic solvent. The other component, often referred to as the 'hardener', comprises the polyisocyanate, again usually dissolved in an organic solvent.

The two components are mixed together shortly before use because the hydroxyl functional polymer and the polyisocyanate react with each other from the moment the components are mixed. This means that the viscosity begins to rise, eventually resulting in the composition becoming unusable. The time between mixing the components together and the composition becoming unusable is known as the potlife of the composition.

Refinish paint is usually required to be an exact match to the original paint on the motor vehicle applied by the manufacturer and a refinisher is generally required to be able to match any vehicle which he is required to repair. There are thousands of different colours which are either currently in use by motor vehicle manufacturers or which have been applied in the past to motor vehicles which are still on the road and which may require refinishing.

It is not feasible for the refinisher to stock all possible colours and so refinish paints are generally supplied in the form of a mixing scheme. A mixing scheme comprises a number of pigmented base paints in a small range of around 30 to 100 master colours. These base paints can be mixed together in predetermined proportions to obtain a paint pack in any desired final colour. Thus, a mixing scheme is not a scheme in the sense of a method but is a term used in the Refinish art for a set of pigmented base paints.

As well as the pigmented base paints, the mixing scheme can also comprise what is known as a blending clear. A blending clear is essentially an unpigmented base paint although it can contain a different polymer from the pigmented base paints. The blending clear is added to the paint pack along with the pigmented base paints in order to achieve the desired pigment to binder ratio in the paint pack.

Generally, each mixing scheme uses one particular blending clear. The blending clear can be changed to produce final coating compositions having different properties. A set of base paints together with a set of formulations for producing the extensive range of colours required is very expensive and time consuming to produce. For this reason, the use of different blending clears to alter the properties of the final coating composition without having to alter the base paints can represent an important cost saving.

For example, the use of a blending clear having a very low volatile organic content can enable a given mixing scheme to be used in countries where legislation demands a low volatile organic content in the final coating composition.

An important additional component of these coating compositions is a catalyst for the isocyanate-hydroxyl reaction. The catalyst is generally included in the paint pack either by being included in the base paints themselves or by being added as a separate component when the paint pack is made up from the appropriate base paints. The catalyst is used to speed up the curing of the coating composition and so to enable the refinisher to complete the refinish job more quickly. The presence of a catalyst also shortens the potlife of the compositions. Most refinish compositions are a delicate balance between pot-life and speed of cure. This balance is particularly difficult to achieve satisfactorily in compositions which contain a relatively low level of organic solvent, known as 'high solids' compositions.

It is advantageous to include most, or all, of the catalyst not in the pigmented base paints but either alone as a separate catalyst component of the mixing scheme or in a blending clear. This means that the catalyst levels in the final composition can be altered by using a different catalyst component or blending clear without having to reformulate all the pigmented base paints. This is useful when adapting a mixing scheme so that the compositions can be applied under unusual conditions such as high or low temperatures or humidity levels when an appropriate catalyst can be supplied in the form of, for example a "low temperature additive".

A mixing scheme is usually supplied with a set of formulations for mixing the base paints together to make certain desired final colours. The number of formulations is often very large and so they are commonly supplied in the form of a set of microfiches or, more recently, in the form of a computer database.

It is important to realise that a refinish mixing scheme is not merely a collection of paints and other components which can be mixed together. It is vitally important that the end user can mix any coloured paint pack in a fixed ratio with the hardener and that the composition produced has consistent application characteristics across all colours. This means that any paint pack made from the mixing scheme has a solids content and hydroxyl content within a given range.

Each of the pigmented components of a mixing scheme contains a different pigment and these pigments are of differing densities and are dispersed using a variety of dispersing agents. It is vital that any combination of these pigmented components is stable towards flocculation and settling of the pigments and towards colour changes. It is therefore important that none of the dispersed pigments interact in a manner detrimental to the stability or colour of the paint pack.

United States Patent 4 788 083 is essentially concerned with coating compositions based on hydroxyl functional polymers and polyisocyanates which contain a catalyst which can be activated by exposure to amine vapour or by heating above 50°C. The catalysts generally comprise a tin or bismuth compound used in conjunction with a mercapto compound.

Clearly, exposure to amine vapour is not a convenient means of curing a motor vehicle refinish paint. Alternatively, the requirement for heating to above 50°C puts a severe restriction on the use of these catalysts in refinish paints because such heating requires the refinisher to have specialist ovens capable of heating a whole car. While some refinishers do possess such ovens, many do not and a composition restricted to use by refinishers having ovens would be commercially unacceptable. Ovens are unusual in the commercial transport field. A more limited range of catalysts of this type which can be used at room temperature without amine vapour with a narrow range of hydroxyl functional polymers is disclosed in European. Patent Application EP-A-0 454 219.

We have discovered that there is a fundamental problem with many of the catalysts disclosed in US 4 788 083 and EP-A-0 454 219 when they are used in a refinish mixing scheme. The problem is that the catalysts interact with certain commonly used pigments so as to give the coating compositions a reduced potlife. This effect is particularly noticeable with chromium based pigments such as Sicomin Yellow L1835 S (trade mark of BASF). The problem rests not in the fact that the potlife of the compositions is reduced per se but that it is reduced by differing degrees when using different pigments. This means that when complex mixtures of the base paints are made in order to reproduce a particular colour, the pot-life and cure times of the final paint are unpredictable. This means that some final colours have short pot-life and rapid curing and others long pot-life and slow curing. As far as the end user is concerned the potlife and speed of cure appear to be subject to random variation across the colour range. Such variation is unacceptable for refinishers who require a predictable product.

We have discovered that these problems can be reduced or overcome by a coating process which involves coating compositions containing certain selected catalysts of the type generally disclosed in US 4 788 083 which unexpectedly behave in a much more consistent way with the various pigments and so reduce or overcome the problems associated with the selection of different pigmented master colours by the refinisher, outlined above.

According to the present invention there is provided a process of painting a motor vehicle which comprises;
(i) selecting and mixing two or more pigmented base paints from a series of master colours in predetermined proportions so as to obtain a paint pack having a desired final colour, each base paint comprising a hydroxyl functional polymer, optionally also adding an unpigmented blending clear comprising a hydroxyl functional polymer,
(ii) adding (a) a tin catalyst for the reaction between isocyanate groups and hydroxyl groups, and (b) a polyfunctional thiol having at least three thiol groups, optionally one or both of these components being added as part of the blending clear,
(iii) either before or after the tin catalyst and the polyfunctional thiol are added, adding a hardener comprising a polyisocyanate crosslinker, so as to form a pigmented thermosetting coating composition having an improved consistency of potlife irrespective of the pigments contained therein,
(iv) applying a layer of the composition so formed to the surface of a vehicle, and
(v) causing or allowing the layer to dry and cure.

One or both of the tin catalyst and the polyfunctional thiol can be included in the blending clear or can be separate components of the mixing scheme. Preferably the tin catalyst and polyfunctional thiol are present together as a catalyst mixture, either as a separate component or included in the blending clear.

The catalyst mixture can be made by mixing the tin catalyst and the polyfunctional thiol together. The catalyst mixture can be included in the blending clear by mixing the tin catalyst and the polyfunctional thiol with the blending clear either sequentially or simultaneously.

Tin catalysts are well known in the art for the catalysis of the reaction between isocyanate groups and hydroxyl groups. Examples of tin catalysts include alkyl, aryl and acyl compounds of tin, such as stannous octoate, as well as tin oxide, mercaptides and halides such as stannous chloride and stannic chloride. Examples of tin catalysts also include tin compounds with a combination of these groups such as dialkyl tin diacylates such as dibutyl tin dilaurate, dialkyl tin dimercaptides such as dibutyl tin dilaurylmercaptide and dialkyl tin dihalides such as dibutyl tin dichloride. Mixtures of any of these compounds can also be used.

Preferred tin catalysts are tin mercaptides. It has been found that the specific use of tin mercaptides gives rise to an additional benefit of an improved rate of curing of the compositions without any reduction in potlife. The improved rate of curing is particularly noticeable in the early stages of curing for example in improved 'dust-free' times, i.e. the time after application when dust no longer sticks to the surface of the paint.

Tin mercaptides are compounds having a tin atom covalently bonded to a sulphur atom. There can be 1 to 4 sulphur atoms covalently bonded to each tin atom, preferably there are two sulphur atoms bonded to each tin atom. Preferred tin mercaptides can be represented by the general formula;

Sn (S-R')ₐ R₄₋ₐ

in which a is 1 to 4, preferably 2, R which can be the same or different, are C₁₋₁₀ alkyl, preferably C₄₋₈ alkyl such as butyl or octyl, and R' which can be the same or different, are alkyl optionally carrying an ester group. Examples of suitable alkyl groups are C₁₋₁₀ straight chain or branched alkyl, such as methyl, ethyl, n-propyl, isopropyl, n-butyl, isobutyl, n-hexyl, 2-ethyl hexyl, n-octyl and isooctyl. Examples of alkyl groups carrying an ester group are groups of the formula -CH₂-(R²)-COOR³ in which R² is a C₁₋₅ alkylene chain or can be omitted and R³ is a C₁₋₁₀ branched or straight chain alkyl group such as methyl, ethyl, isobutyl, 2-ethyl hexyl, n-octyl or iso-octyl.

Many such tin mercaptides are commercially available, for example under the Stanclere trade mark from Akzo, such as Stanclere T482, T473, T582, T483, T182, T163, under the DABCO trade mark from Air Products, such as DABCO T1403 and under the Irgastab trade mark from Ciba Geigy, such as Irgastab 17M which is a preferred tin mercaptide.

When included in the blending clear, the tin catalyst is preferably present in an amount 0.0001 to 3% by weight, more preferably 0.001 to 3%, most preferably 0.005 to 2% by weight based on the amount of hydroxyl functional polymer in the blending clear.

Preferably in the coating composition, the tin catalyst is present in an amount 0.00001 to 3% by weight based on the total weight of hydroxyl functional polymer, preferably 0.001 to 3% by weight and more preferably 0.005 to 2% by weight.

Preferred polyfunctional thiols have at least four thiol groups, more preferably 4 to 8 thiol groups and most preferably 4 thiol groups.

Preferred polyfunctional thiols have a thiol equivalent weight of at least 50, more preferably 50 to 300 and most preferably 75 to 150.

Examples of suitable thiols include pentaerythritol tetra-(3-mercaptopropionate), pentaerythritol tetra-(3-mercaptoacetate), trimethylol propane trithioglycolate and trimethylol propane tri(3-mercaptopropionate). Pentaerythritol tetra-(3-mercapto acylates) such as pentaerythritol tetra-(3-mercapto acetate) or pentaerythritol tetra-(3-mercaptopropionate) are preferred.

Preferably the ratio of the number of moles of thiol groups from the polyfunctional thiol to the number of moles of tin from the tin catalyst in the coating compositions is 1:1 to 500:1, more preferably 1:1 to 100:1, and most preferably 3:1 to 50:1.

The hydroxy functional polymer in the blending clear and in the pigmented base paints can be the same or different and can comprise a mixture of different polymers. Preferred hydroxyl functional polymers have a number average molecular weight as measured by gel permeation chromatography of 600 to 10 000, more preferably 1 000 to 4 000. Preferably the hydroxyl functional polymer has a hydroxyl value of 5 to 500, more preferably 50 to 250.

The hydroxyl functional polymer can be any hydroxyl functional film-forming polymer and many suitable hydroxyl functional polymers are commercially available. Conventional film forming polymers include acrylic addition polymers, epoxy polymers, alkyd polymers, polyether polymers or polyester polymers. Preferred hydroxyl functional polymers are hydroxyl functional acrylic addition polymers and hydroxyl functional polyesters or mixtures of these.

Hydroxyl functional acrylic addition polymers are derived from polymerisable ethylenically unsaturated monomers such as vinyl or acrylic monomers and comprise functional units and structural units.

Whenever referred to herein, the term acrylic monomer refers to esters of acrylic or methacrylic acid. The term (meth) acrylate refers to both the acrylate and methacrylate equally and the term (meth) acrylic acid refers to acrylic or methacrylic acid equally.

Functional units are derived from hydroxyl functional vinyl or acrylic monomers. An example of a hydroxyl functional vinyl monomer is vinyl alcohol. Examples of hydroxyl functional acrylic monomers are hydroxy ethyl (meth) acrylate, hydroxy butyl (meth) acrylate and hydroxy propyl (meth) acrylate. A preferred hydroxyl functional monomer is 4-hydroxybutyl acrylate.

Other examples of suitable hydroxyl functional monomers are the reaction products of glycidyl (meth) acrylate with monocarboxylic acids, such as versatic acid and the reaction product of (meth) acrylic acid with monoepoxy compounds such as Cardura E (glycidyl ester of versatic acid; trade mark of Shell).

Structural units are derived from monomers which do not have any functional groups which will react with the crosslinker. Examples of monomers which do not have any functional group which will react with the crosslinker are non-functional vinyl monomers and alkyl esters of (meth) acrylic acid.

Examples of suitable non-functional vinyl monomers are styrene tertiary butyl styrene and alpha methyl styrene, preferably alpha methyl styrene. Examples of suitable alkyl esters of (meth) acrylic acid are C₁₋₁₂ alkyl esters such as methyl (meth) acrylate, ethyl (meth) acrylate, n-butyl (meth) acrylate, t-butyl (meth) acrylate, n-propyl (meth) acrylate and isobornyl (meth)acrylate, preferably isobornyl methacrylate.

Monomers which carry groups other than hydroxyl groups, such as carboxylic acid groups, amine groups and epoxy groups can also be included. An example of a monomer carrying a carboxylic acid group is (meth) acrylic acid. An example of a monomer carrying an amine groups is tertiary-butyl aminoethyl (meth) acrylate. An example of a monomer carrying a glycidyl group is glycidyl (meth) acrylate.

Certain functional groups can be reacted with other compounds so as to modify the polymer. For example, acid groups on the polymer can be reacted with glycidyl functional compounds such as the glycidyl ester of versatic acid (Cardura E from Shell) and epoxy groups on the polymer can be reacted with an acid functional compound, for example versatic acid.

The acrylic addition polymers can also contain units derived from chain transfer agents. Chain transfer agents are compounds which are used in the manufacture of acrylic addition polymers to control their molecular weight. Examples of known chain terminating agents include mercapto functional compounds.

Examples of suitable mercapto functional compounds are alkyl mercaptans, such as primary octyl mercaptan, hydroxyalkyl mercaptans, such as mercaptoethanol and mercaptoalkanoic acids such as mercaptopropionic acid.

A particularly preferred class of chain transfer agents are mercaptoalkanoic acids. A particularly preferred mercapto alkanoic acid is mercaptopropionic acid.

Preferred acrylic addition polymers have a theoretical glass transition temperature (Fox Tg) of 0 to 80°C, more preferably 20 to 70°C.

The hydroxyl functional acrylic addition polymer can be produced conventionally by contacting a mixture of the appropriate monomers and any chain transfer agent with a polymerisation initiator at a temperature at which polymerisation occurs. For example the monomer mixture can be slowly fed into a solution of initiator held at the polymerisation temperature or the initiator can be fed into a solvent at the polymerisation temperature simultaneously with the monomer mixture.

Suitable initiators are azo initiators such as 2,2' azobis (2-methylbutyronitrile) or peroxy initiators such as benzoyl peroxide.

Hydroxyl functional polyester polymers have units derived from one or more polybasic acids and units derived from one or more polyhydroxy compounds.

Polybasic acids are compounds having two or more carboxylic acid groups or an equivalent number of anhydride groups (on the basis that one anhydride group is equivalent to two acid groups). Such polybasic acids are well known in the polyester art. Examples of suitable polybasic acids are C₁₋₆ alkane dioic acids such as adipic acid or hexanedioic acid, cycloaliphatic acids such as hexahydrophthalic acid, unsaturated alkane dioic acids such as fumaric or maleic acids, dimer acids, and aromatic acids such as phthalic acid. Their equivalent anhydrides such as maleic anhydride or phthalic anhydride can also be used. Preferably the polybasic acids are saturated.

Polyhydroxy compounds are compounds having two or more hydroxyl groups and are well known in the polyester art. Examples of suitable polyhydroxy compounds are trimethylol propane, glycerol, neopentyl glycol and pentaerythritol.

The hydroxyl functional polyester polymer can be produced conventionally by melting together the components of the polyester. Alternatively the components can be dissolved in a suitable solvent. The melt or solution is then heated so as to remove any water produced in the reaction, for example by azeotropic distillation using a Dean and Stark apparatus.

The pigments can be any pigments useful for refinish paints, and an enormous number are known and used. Examples of suitable pigments include Sicomin Yellow L1835 S, and Sicomin Red L3035 S (trade marks of BASF), Polomar Blue B-4808 (trade mark of Miles Corporation) and Monolite Red 2Y (trade mark of Zeneca Colours). The majority of base paints and paint packs comprise a complex mixture of pigments so as to give the desired colour.

The pigmented base paints and the blending clear, can also contain other conventional paint additives such as reactive diluents, UV absorbers and flow aids. The pigmented base paints can also contain fillers.

The catalyst mixture, when it is present as a separate component, the base paints and the blending clear can also comprise a volatile organic solvent. The volatile organic solvent can be any solvent in which the various components can be dissolved or dispersed, preferably one which dissolves the hydroxy functional polymer. It can be an aliphatic or aromatic hydrocarbon such as Solvesso 100 (trademark), toluene or xylene, an alcohol such as butanol or isopropanol, an ester such as butyl acetate or ethyl acetate, a ketone such as acetone, methyl isobutyl ketone or methyl ethyl ketone, an ether, an ether-alcohol or an ether-ester or a mixture of any of these.

Preferably the base paints are selected from a refinish mixing scheme. Preferably the mixing scheme comprises about 10 to 100 pigmented base paints, more preferably about 20 to 50. The selection of base paints and their ratios is preferably made according to one of a number of predetermined formulations supplied as part of the mixing scheme.

Preferably a paint pack comprises less than 50% by weight of solvent, more preferably less than 40% and most preferably less than 35%.

Polyisocyanates are well known in the coatings art and are compounds having two or more isocyanate groups per molecule. The isocyanate groups are not blocked.

Suitable diisocyanates are aliphatic or aromatic diisocyanates. Examples of suitable aliphatic diisocyanates are hexamethylene diisocyanate and isophorone diisocyanate. Examples of suitable aromatic diisocyanates are toluene diisocyanate and 4,4'-diphenylmethane diisocyanate.

Other suitable polyisocyanates include the isocyanurate trimers, allophanates and uretdiones of diisocyanates such as those described above as well as the reaction products of these diisocyanates with polyols. Polyols are compounds having three or more hydroxyl groups. Suitable polyols include trimethylol propane, glycerol and pentaerythritol. Many such poly isocyanates are commercially available, for example under the Desmodur trade mark from Bayer or the Tolonate trade mark from Rhone Poulenc, such as Tolonate HD90.

Polyisocyanates are preferably used in an amount such that the ratio of isocyanate groups from the polyisocyanate to the total number of hydroxyl groups from the hydroxyl functional polymer in the paint pack is in the range 0.8 to 1.4, more preferably 0.9 to 1.1.

The hardener usually also comprises a volatile organic solvent for the polyisocyanate. The volatile organic solvent can be any of those mentioned above in relation to the catalyst mixture, blending clear and pigmented base paints. Preferably the hardener comprises less than 40% volatile organic solvent. The hardener can also comprise a water scavenger.

As well as any volatile organic solvent from the paint pack and the hardener, the final coating composition can also comprise additional organic solvent. The organic solvent can be any of those mentioned above in relation to the catalyst mixture, blending clear and pigmented base paints. Additional organic solvent can be added to the coating composition to reduce the viscosity, and so improve the application properties, particularly when the composition is applied by spraying.

Preferably the coating composition contains less than 600g/l of volatile organic solvent in total, more preferably less than 500g/l and most preferably less than 400g/l. The content of organic solvent can be determined by firstly measuring the density of the coating composition at 25°C and then determining the proportion of organic solvent on a weight basis. This is done by heating an accurately weighed sample of about 0.3g of composition in an oven preheated to 110°C for 1 hour, reweighing and calculating the weight of solvent which is lost by subtraction. The proportion by weight of organic solvent can be converted to a proportion on a volume basis in g/l by multiplying by the density of the composition in g/l.

The mixing of the pigmented bases and any blending clear, catalyst mixture and polyisocyanate can be carried out by stirring or shaking the components together, either by hand or by using a mechanical stirrer or shaker.

The coating composition can be applied to the surface of the motor vehicle by conventional means such as brushing, rollercoating or spraying, preferably by spraying.

Motor vehicles are conventionally made largely of steel sheet but can also comprise aluminium sheet and often comprise at least a proportion of moulded plastic components. The compositions are usually applied over one of more layers of primer or undercoat.

The applied layer can be allowed to dry and cure at ambient temperature or alternatively the layer can be baked at elevated temperatures, for example 50-120°C for 5 to 120 minutes to accelerate drying and curing. During drying and curing the solvent evaporates and the hydroxyl groups on the polymer and the isocyanate groups on the crosslinker react together so as to produce a crosslinked coating film.

According to the present invention there is also provided a coated motor vehicle obtainable by the process.

The invention is illustrated by the following examples.

### EXAMPLES

Coating compositions were made comprising a pigmented base paint, a polyisocyanate hardner, a thinner and a blending clear containing various catalysts. The pigmented base paint comprised hydroxyl functional polymers and various pigments. Two base paints were made using commercially available mixing basics, a yellow base paint containing a chrome based pigment and a black base paint containing a carbon based pigment.

The blending clears contained a hydroxy functional acrylic addition polymer, various catalyst mixtures and other additives. The catalyst mixtures were either a two functional thiol, a three functional thiol or a four functional thiol in combination with a commercially available tin mercaptide catalyst.

The viscosity of the catalysed compositions was measured both initially and after 2 hours at 25°C.

### 1 Hardener Formulation

The following components were mixed (by weight %);

| | |
|---|---|
| Xylene | 9.34 |
| Solvesso 100 aromatic hydrocarbon solvent from Exxon | 9.34 |
| Tolonate HDT 90 polyisocyanate from Rhone Poulenc | 66.47 |

### 2 Thinner Formulation

The following components were mixed (by weight %);

| | |
|---|---|
| Butyl acetate | 35 |
| Solvesso 100 | 25 |
| 1-methoxy-2-propanol acetate | 25 |
| Xylene | 10 |
| Methyl isobutyl ketone | 5 |

### 3. Yellow Base Paint

The yellow base paint was a colour called Golden Yellow made from the following components which are all commercially available from Imperial Chemical Industries Plc in their Turbo Plus mixing scheme. The pigmentation is largely chrome based.

| | |
|---|---|
| P 488-942 | 39.0g |
| P 488-951 | 102.0g |
| P 488-964 | 2829.0g |
| P 488-982 | 30.0g |

### 4. Black Base Paint

The black base paint was a colour called Raven Black made from the following components which are all commercially available from Imperial Chemical Industries Plc in their Turbo Plus mixing scheme. The pigmentation is largely carbon based.

| | |
|---|---|
| P 425-957 | 189.54g |
| P 488-951 | 773.45g |
| P 488-981 | 2037.02g |

### 5. Preparation of hydroxyl functional acrylic addition polymer.

Methyl isoamyl ketone (613g) was heated to reflux temperature (about 145°C) with stirring under nitrogen. A mixture of methyl methacrylate (618.4g), butyl acrylate (434.8g), hydroxy ethyl methacrylate (507g), styrene (390g), Vazo 67 (2,2-azobis-(2-methylbutyronitrile), trade mark of duPont 97.5g), primary octyl mercaptan (97.5g) and methyl isoamyl ketone (235g) were added slowly to the refluxing mixture over a period of 3 hours. Trigonox 21s (butyl peroxy-2-ethyl hexanoate, trade mark of Akzo, 3.4g) was added and the mixture was stirred at reflux temperature for a further hour. Trigonox 21s (3.4g) was added, the mixture was stirred at reflux temperature for a further hour and the mixture was allowed to cool to room temperature. The resulting hydroxyl functional acrylic addition polymer had a calculated glass transition temperature (Fox Tg) of 40°C, a hydroxyl value of 112 mgKOH/g based on non-volatile content and had a non-volatile content of 70%.

### 6 Preparation of Blending Clears 1 to 9

Blending clears 1 to 9 were made by mixing the hydroxyl functional acrylic addition polymer from 6 above with tin mercaptide catalyst (50% weight solution in methyl isobutyl ketone of Irgastab 17M) and a thiol. Blending clears 1 to 3 contain pentaerythritol tetramercaptopropionate (Tetra thiol), blending clears 4 to 6 contain trimethylol propane trimercaptopropionate (Trithiol) and blending clears 7 to 9 contain ethylene glycol dimercaptopropionate (Dithiol). Within each set, the weight ratio of the tin catalyst solution to the thiol is 3:2, 1:2 and 1:3. All figures are by weight %.

### 6.1 Blending Clear 1

| | | |
|---|---|---|
| Polymer | 97.06 | |
| Byk 306 | 0.40 | (Flow aid, from Byk) |
| Baysilone OL31 | 0.40 | (Flow aid, from Bayer) |
| Irgastab 17M soln. | 0.45 | |
| Tetrathiol | 0.30 | |
| Solvesso 100 | 1.39 | |

### 6.2 Blending Clear 2

| | |
|---|---|
| Polymer | 97.06 |
| Byk 306 | 0.40 |
| Baysilone OL31 | 0.40 |
| Irgastab 17M soln. | 0.15 |
| Tetrathiol | 0.30 |
| Solvesso 100 | 1.69 |

### 6.3 Blending Clear 3

| | |
|---|---|
| Polymer | 97.06 |
| Byk 306 | 0.40 |
| Baysilone OL31 | 0.40 |
| Irgastab 17M soln. | 0.15 |
| Tetrathiol | 0.45 |
| Solvesso 100 | 1.54 |

### 6.4 Blending Clear 4

| | |
|---|---|
| Polymer | 97.06 |
| Byk 306 | 0.40 |
| Baysilone OL31 | 0.40 |
| Irgastab 17M soln. | 0.45 |
| Trithiol | 0.33 |
| Solvesso 100 | 1.36 |

### 6.5 Blending Clear 5

| | |
|---|---|
| Polymer | 97.06 |
| Byk 306 | 0.40 |
| Baysilone OL31 | 0.40 |
| Irgastab 17M soln. | 0.15 |
| Trithiol | 0.33 |
| Solvesso 100 | 1.66 |

### 6.6 Blending Clear 6

| | |
|---|---|
| Polymer | 97.06 |
| Byk 306 | 0.40 |
| Baysilone OL31 | 0.40 |
| Irgastab 17M soln. | 0.15 |
| Trithiol | 0.30 |
| Solvesso 100 | 1.39 |

### 6.7 Blending Clear 7

| | |
|---|---|
| Polymer | 97.06 |
| Byk 306 | 0.40 |
| Baysilone OL31 | 0.40 |
| Irgastab 17M soln. | 0.45 |
| Dithiol | 0.30 |
| Solvesso 100 | 1.39 |

### 6.8 Blending Clear 8

| | |
|---|---|
| Polymer | 97.06 |
| Byk 306 | 0.40 |
| Baysilone OL31 | 0.40 |
| Irgastab 17M soln. | 0.15 |
| Dithiol | 0.30 |
| Solvesso 100 | 1.69 |

### 6.9 Blending Clear 9

| | |
|---|---|
| Polymer | 97.06 |
| Byk 306 | 0.40 |
| Baysilone OL31 | 0.40 |
| Irgastab 17M soln. | 0.15 |
| Dithiol | 0.45 |
| Solvesso 100 | 1.54 |

### 7 Final coating compositions

The coating compositions were made by firstly mixing the coloured base paint and each of the blending clears 1 to 9 in a weight ratio of blending clear to base paint of 30.1:69.9 for the yellow paints and 39.5:60.5 for the black paints. Then these mixtures were mixed with hardener and thinner. For the yellow paints, the coloured base paint/blending clear mixture, hardener and thinner were mixed in a 100:22.1:18.6 weight ratio. For the black paints, the coloured base paint/blending clear mixture, hardener and thinner were mixed in a 100:25.88:18.6 weight ratio.

The initial viscosity of all the compositions was 30s BS B4 cup. The viscosity rise after 2h of the various compositions are given in Table 1 below, measured in seconds in a BS B4 cup,

**Table 1**

| | Blending Clear | Viscosity rise after 2h |
|---|---|---|
| Yellow Paints | 1 | 37 |
| | 2 | 12 |
| | 3 | 10 |
| | 4 | 47 |
| | 5 | 17 |
| | 6 | 13 |
| | 7 | 90 |
| | 8 | 27 |
| | 9 | 24 |
| Black Paints | 1 | 7 |
| | 2 | 6 |
| | 3 | 5 |
| | 4 | 6 |
| | 5 | 5 |
| | 6 | 5 |
| | 7 | 5 |
| | 8 | 6 |
| | 9 | 6 |

### 8 Application and Testing

The compositions in the table above were applied over clean glass panels using a 175µm block spreader. The Knoop hardness of the resulting films was measured 24 hours after application using an Erichsen Hardness Tester (Trade mark). The results are given in Table 2 below.

| | Blending Clear | Hardness |
|---|---|---|
| Yellow Paints | 1 | 53 |
| | 2 | 57 |
| | 3 | 47 |
| | 4 | 48 |
| | 5 | 45 |
| | 6 | 45 |
| | 7 | 47 |
| | 8 | 44 |
| | 9 | 48 |
| Black Paints | 1 | 38 |
| | 2 | 48 |
| | 3 | 47 |
| | 4 | 51 |
| | 5 | 45 |
| | 6 | 55 |
| | 7 | 55 |
| | 8 | 54 |
| | 9 | 47 |

## Claims

1. A process of painting a motor vehicle which comprises;
(i) selecting and mixing two or more pigmented base paints from a series of master colours in predetermined proportions so as to obtain a paint pack having a desired final colour, each base paint comprising a hydroxyl functional polymer, optionally also adding an unpigmented blending clear comprising a hydroxyl functional polymer,
(ii) adding (a) tin catalyst for the reaction between isocyanate groups and hydroxyl groups, and (b) a polyfunctional thiol having at least three thiol groups, optionally one or both of these components being added as part of the blending clear,
(iii) either before or after the tin catalyst and the polyfunctional thiol are added, adding a hardener comprising a polyisocyanate crosslinker, so as to form a thermosetting pigmented coating composition having an improved consistency of potlife irrespective of the pigments contained therein,
(iv) applying a layer of the composition so formed to the surface of a vehicle, and
(v) causing or allowing the layer to dry and cure.

2. A process as claimed in claim 1 in which the tin catalyst is a tin mercaptide.

3. A process as claimed in claim 1 or claim 2 in which the tin catalyst is added in amount of from 0.0001 to 3% by weight based on the weight of the polymer.

4. A process as claimed in any one of claims 1 to 3 in which the polyfunctional thiol has at least 4 thiol groups.

5. A process as claimed in any one of Claims 1 to 4 in which the polyfunctional thiol has a thiol equivalent weight of at least 50.

6. A process as claimed in any one of claims 1 to 5 in which the ratio of the number of moles of thiol groups from the polyfunctional thiol to the number of moles of tin from the tin catalyst in the catalyst mixture is 1:1 to 500:1.

7. A process as claimed in any one of Claims 1 to 6 in which the hydroxyl functional polymers in the pigmented base paint and in the optional blending clear are independently a hydroxyl functional acrylic addition polymer or a hydroxyl functional polyester or a mixture of these.

8. A process as claimed in any one of Claims 1 to 7 in which the hydroxyl functional polymers in the pigmented base paint and in the optional blending clear independently have a number average molecular weight as measured by gel permeation chromatography of 600 to 10 000.

9. A process as claimed in any one of Claims 1 to 8 in which the hydroxyl functional polymers in the pigmented base paint and in the optional blending clear independently have a hydroxyl value of 5 to 500.

10. A process as claimed in any one of Claims 1 to 8 in which the hydroxyl functional polymers in the pigmented base paint and in the optional blending clear independently are acrylic addition polymers with a Fox Tg of 0 to 80°C.

11. A process as claimed in any one of claims 1 to 10 in which the hardener is added in an amount such that the ratio of the number of isocyanate groups from the polyisocyanate to the number of hydroxyl groups from the polymer is in the range 0.8 to 1.4.

12. A coated substrate obtainable by the process of claim 1.

## Patentansprüche

1. Verfahren zum Lackieren eines Kraftfahrzeugs, das Folgendes umfasst:
(i) Auswahl und Mischen von zwei oder mehr pigmentierten Basislacken aus einer Reihe von Master-Farben in prädeterminierten Anteilen, um auf diese Weise eine Lackkomponente mit einer gewünschten Endfarbe zu erhalten, wobei jeder Basislack ein Polymer mit funktioneller Hydroxylgruppe umfasst, wobei optional auch ein nicht pigmentierter Klarlack (Blending Clear) zugefügt wird, der ein Polymer mit funktioneller Hydroxylgruppe umfasst,
(ii) Zufügen (a) eines Zinnkatalysators für die Reaktion zwischen Isocyanatgruppen und Hydroxylgruppen, und (b) eines polyfunktionellen Thiols mit mindestens drei Thiolgruppen, wobei optional eine oder beide dieser Komponenten als Teil des Klarlacks zugefügt werden,
(iii) entweder bevor oder nachdem der Zinnkatalysator und das polyfunktionelle Thiol zugefügt werden, Zufügen eines Härters, der ein Polyisocyanat-Vemetzungsmittel umfasst, um auf diese Weise eine hitzehärtbare pigmentierte Beschichtungszusammensetzung mit einer verbesserten Topfzeit-Konsistenz ungeachtet der darin enthaltenen Pigmente zu bilden,
(iv) Auftragen einer auf diese Weise gebildeten Schicht der Zusammensetzung auf die Oberfläche eines Fahrzeugs und
(v) Veranlassen der Schicht zum Trocknen oder Härten oder die Schicht trocknen und härten lassen.

2. Verfahren nach Anspruch 1, worin der Zinnkatalysator ein Zinnmercaptid ist.

3. Verfahren nach Anspruch 1 oder 2, worin der Zinnkatalysator in einer Menge von 0,0001 bis 3 Gew.-% bezogen auf das Gewicht des Polymers zugefügt wird.

4. Verfahren nach einem der Ansprüche 1 bis 3, worin das polyfunktionelle Thiol mindestens vier Thiolgruppen aufweist.

5. Verfahren nach einem der Ansprüche 1 bis 4, worin das polyfunktionelle Thiol ein dem Thiol äquivalentes Gewicht von mindestens 50 aufweist.

6. Verfahren nach einem der Ansprüche 1 bis 5, worin das Verhältnis der Anzahl von Molen der Thiolgruppen von dem polyfunktionellen Thiol zu der Anzahl von Molen des Zinns von dem Zinnkatalysator in dem Katalysatorgemisch 1:1 bis 500:1 beträgt.

7. Verfahren nach einem der Ansprüche 1 bis 6, worin die Polymere mit funktioneller Hydroxylgruppe in dem pigmentierten Basislack und in dem optionalen Klarlack unabhängig ein Acryl-Additionspolymer mit funktioneller Hydroxylgruppe oder ein Polyester mit funktioneller Hydroxylgruppe oder ein Gemisch von diesen sind.

8. Verfahren nach einem der Ansprüche 1 bis 7, worin die Polymere mit funktioneller Hydroxylgruppe in dem pigmentierten Basislack und in dem optionalen Klarlack unabhängig ein Zahlenmittel des Molekulargewichts wie anhand der Gelpermeationschromatographie gemessen von 600 bis 10 000 aufweisen.

9. Verfahren nach einem der Ansprüche 1 bis 8, worin die Polymere mit funktioneller Hydroxylgruppe in dem pigmentierten Basislack und in dem optionalen Klarlack unabhängig eine Hydroxylzahl von 5 bis 500 aufweisen.

10. Verfahren nach einem der Ansprüche 1 bis 8, worin die Polymere mit funktioneller Hydroxylgruppe in dem pigmentierten Basislack und in dem optionalen Klarlack unabhängig Acryl-Additionspolymere mit einer Foxschen Tg (Glasübergangstemperatur) von 0 bis 80 °C sind.

11. Verfahren nach einem der Ansprüche 1 bis 10, worin der Härter in einer Menge dergestalt zugefügt wird, dass das Verhältnis der Anzahl der Isocyanatgruppen von dem Polyisocyanat zu der Anzahl der Hydroxylgruppen von dem Polymer in dem Bereich von 0,8 bis 1,4 liegt.

12. Beschichtetes Substrat, das anhand des Verfahrens nach Anspruch 1 erhältlich ist.

## Revendications

1. Procédé de peinture d'une automobile, comprenant :
(i) la sélection et le mélange de deux ou plusieurs peintures de base pigmentées à partir d'une série de couleurs mères dans des proportions prédéterminées, de façon à obtenir un composant de peinture ayant une couleur finale désirée, chaque peinture de base comprenant un polymère à fonction hydroxyle, ainsi que l'addition éventuelle d'une peinture limpide de coupage [blending clear] non pigmentée comprenant un polymère à fonction hydroxyle,
(ii) l'addition (a) d'un catalyseur à l'étain pour la réaction entre les groupements isocyanate et les groupements hydroxyle, et (b) d'un thiol multi-fonctionnel ayant au moins trois groupements thiols, l'un de ces composants, ou les deux, étant éventuellement ajouté(s) comme partie de la peinture limpide de coupage,
(iii) soit avant ou après l'addition du catalyseur à l'étain et du thiol multi-fonctionnel, l'addition d'un durcisseur comprenant un agent de réticulation au polyisocyanate, de façon à former une composition de revêtement pigmentée et thermodurcissable, ayant une consistance de vie en pot améliorée quels que soient les pigments y étant contenus,
(iv) l'application d'une couche de la composition ainsi formée à la surface d'un véhicule, et
(v) une étape de provoquer ou de permettre le séchage et le durcissement de la couche.

2. Procédé selon la revendication 1, dans lequel le catalyseur à l'étain est un mercaptide d'étain.

3. Procédé selon la revendication 1 ou la revendication 2, dans lequel le catalyseur à l'étain est ajouté en une quantité de 0,0001 à 3% en poids sur la base du poids du polymère.

4. Procédé selon l'une quelconque des revendications 1 à 3, dans lequel le thiol multi-fonctionnel comprend au moins 4 groupements thiol.

5. Procédé selon l'une quelconque des revendications 1 à 4, dans lequel le thiol multi-fonctionnel a un poids en équivalent de thiol d'au moins 50.

6. Procédé selon l'une quelconque des revendications 1 à 5, dans lequel le rapport du nombre de moles de groupements thiol du thiol multi-fonctionnel au nombre de moles d'étain du catalyseur à l'étain dans le mélange de catalyseur est de 1:1 à 500:1.

7. Procédé selon l'une quelconque des revendications 1 à 6, dans lequel les polymères à fonction hydroxyle dans la peinture de base pigmentée et dans la peinture limpide de coupage éventuelle sont indépendamment un polymère d'addition acrylique à fonction hydroxyle ou un polyester à fonction hydroxyle ou un mélange de ceux-ci.

8. Procédé selon l'une quelconque des revendications 1 à 7, dans lequel les polymères à fonction hydroxyle dans la peinture de base pigmentée et dans la peinture limpide de coupage éventuelle ont indépendamment un poids moléculaire moyen en nombre, tel que mesuré par chromatographie de perméation sur gel, de 600 à 10 000.

9. Procédé selon l'une quelconque des revendications 1 à 8, dans lequel les polymères à fonction hydroxyle dans la peinture de base pigmentée et dans la peinture limpide de coupage éventuelle ont indépendamment un indice d'hydroxyle de 5 à 500.

10. Procédé selon l'une quelconque des revendications 1 à 8, dans lequel les polymères à fonction hydroxyle dans la peinture de base pigmentée et dans la peinture limpide de coupage éventuelle sont indépendamment des polymères d'addition acrylique ayant une Tg Fox de 0 à 80°C.

11. Procédé selon l'une quelconque des revendications 1 à 10, dans lequel le durcisseur est ajouté en une quantité telle que le rapport du nombre de groupements isocyanate du polyisocyanate au nombre de groupements hydroxyle du polymère est dans la plage de 0,8 à 1,4.

12. Substrat revêtu pouvant être obtenu par le procédé selon la revendication 1.
